**Europäisches Patentamt**

**European Patent Office**

**Office européen des brevets**

(19)

(11) Numéro de publication: **0 034 101**
**B1**

(12) **FASCICULE DE BREVET EUROPEEN**

(45) Date de publication du fascicule du brevet: 30.05.84

(21) Numéro de dépôt: **81400189.7**

(22) Date de dépôt: **06.02.81**

(51) Int. Cl.³: **F 16 L 19/06**

(54) **Raccord démontable servant notamment à réunir deux tubes ou tuyaux.**

(30) Priorité: **08.02.80 FR 8002859**

(43) Date de publication de la demande:
**19.08.81 Bulletin 81/33**

(45) Mention de la délivrance du brevet:
**30.05.84 Bulletin 84/22**

(84) Etats contractants désignés:
**AT BE CH DE GB IT LI**

(56) Documents cités:
**FR - A - 688 042**
**FR - A - 1 523 957**
**US - A - 2 452 275**
**US - A - 2 477 969**

(73) Titulaire: **Forges de Belles Ondes, 8, rue Blanche, F-75009 Paris (FR)**

(72) Inventeur: **Faubeau, Edmond, 1, rue Gaetan Pirou, F-95580 Andilly (FR)**

(74) Mandataire: **Peuscet, Jacques, 3, Square de Maubeuge, F-75009 Paris (FR)**

**Description**

La présente invention concerne un raccord démontable servant à assurer la liaison soit entre un appareil et un tuyau ou tube, soit entre deux ou plusieurs tuyaux ou tubes.

On a déjà proposé, dans FR-A-688 042, un raccord comprenant un manchon et deux écrous; l'écrou repousse vers le manchon une bague fendue présentant, du côté orienté vers le manchon, un logement pour un joint torique; le diamètre extérieur du logement croît quand on se déplace vers l'extrémité correspondante de la bague. Un tel dispositif ne permet pas d'assurer avec fiabilité l'étanchéité du raccordement: en effet, la bague vient s'engager sous la surface tronconique du corps en même temps que le joint; il en résulte, que la position axiale de la bague, à la fin du serrage de l'écrou, ne peut être déterminée avec précision puisqu'elle dépend du diamètre externe du tube raccordé, lequel diamètre comporte généralement de larges tolérances. Ainsi, par exemple, dans le cas d'une surépaisseur locale ou d'une déformation locale d'un tube à raccorder, la position axiale de la bague en fin de serrage est éloignée de la zone centrale du manchon et le joint n'est pratiquement pas comprimé.

Dans FR-A-1 523 957, on a proposé un raccord permettant d'obtenir la fiabilité de l'étanchéité au serrage. Un tel raccord comporte, dans le cas de deux tubes à raccorder, un manchon cylindrique qui coopère à chacune de ses extrémités avec un joint torique d'étanchéité, une rondelle plate, un jonc rond ouvert et un écrou de serrage présentant une surface intérieure conique qui vient s'appuyer sur la surface extérieure arrondie du jonc rond ouvert. Dans cette réalisation, le manchon comporte, à chaque extrémité, un logement annulaire où est placé le joint torique d'étanchéité; par ailleurs, la rondelle de protection vient en appui contre l'extrémité correspondante du manchon au moment du vissage de l'écrou sur le manchon. Le taux de compression du joint dans son logement est donc bien défini et totalement indépendant des éventuelles variations des diamètres extérieurs des tubes à raccorder. Cette réalisation évite donc l'inconvénient présenté par le raccord décrit dans FR-A-688 042 et elle permet d'obtenir une étanchéité fiable.

Cependant, le système d'assemblage décrit dans FR-A-1 523 957 ne peut pas s'adapter sur tous les corps de raccord existants car il nécessite la présence, sur le corps de raccord, du logement annulaire destiné à recevoir le joint torique d'étanchéité. En outre, au moment du serrage, il est indispensable que la compression du joint torique à l'intérieur du logement s'effectue jusqu'à la mise en appui de la rondelle de protection contre l'extrémité du corps du raccord, sans que le joint d'étanchéité ne flue entre ces deux éléments. En effet, si le joint d'étanchéité est, au serrage, pincé entre le corps du raccord et la rondelle de protection, de sorte que cette dernière ne peut plus venir directement en appui contre le corps du raccord, non seulement l'étanchéité peut être mal assurée, mais encore le joint d'étanchéité se trouve détérioré et n'est donc plus récupérable pour un remontage ultérieur du raccord.

La présente invention a pour but de proposer un système d'assemblage, qui peut être adapté sur n'importe quel corps de raccord, par exemple sur ceux qui équipent des appareils pneumatiques ou hydrauliques, sans qu'il soit nécessaire d'effectuer de coûteux et délicats travaux de réalésage de l'extrémité des corps de raccord, soit parce que, initialement, il ne comporte pas de logement de joint, soit parce qu'il en comporte un mais que celui-ci est destiné à recevoir des éléments autres que des joints d'étanchéité, par exemple des bagues coupantes. En outre, l'invention a pour but d'éviter tout risque de pincement du joint au moment du serrage de l'écrou du raccord et d'assurer l'étanchéité avec une parfaite fiabilité.

Selon la présente invention, le logement du joint est pratiqué sur la rondelle de protection; ce logement a la forme d'un anneau, dont le diamètre extérieur est progressivement croissant quand on se déplace vers celle des extrémités de la rondelle de protection, qui vient en butée au serrage contre le corps du raccord. Grâce à une telle configuration, la pression de fluide à l'intérieur des tubes assemblés a pour effet de comprimer le joint torique dans la zone de plus petit diamètre du logement annulaire et, plus la pression de fluide à l'intérieur des tubes assemblés est élevée, plus le joint torique est comprimé dans la zone de plus petit diamètre du logement et meilleure est, par conséquent, l'étanchéité qui en résulte entre les tubes et leur rondelle de protection associée.

Selon une caractéristique avantageuse du raccord selon l'invention, la rondelle de protection peut former une seule pièce avec le jonc rond ouvert; le raccord est alors réalisé avec un nombre très réduit de pièces et présente une grande facilité de montage et de démontage.

La présente invention a donc pour objet le produit industriel nouveau que constitue un raccord démontable pour tubes ou tuyauteries comportant, d'une part, un corps où est ménagé au moins un alésage, une extrémité d'un tube à raccorder étant enfilée à l'intérieur dudit alésage, et, d'autre part, pour chaque tube à raccorder, en premier lieu, un joint torique d'étanchéité, en second lieu, une rondelle de protection dont une face est destinée à venir en appui contre le corps du raccord, en troisième lieu, un jonc rond ouvert et, en quatrième lieu, un écrou de serrage portant un filetage intérieur qui coopère avec un filetage extérieur porté par le corps du raccord, ledit écrou s'appuyant par une partie de sa surface intérieure sur le jonc rond précité, caractérisé par le fait que la rondelle de protection présente un logement destiné à recevoir le joint torique d'étanchéité, ce logement ayant la forme d'un anneau ménagé le long de la bordure périphérique intérieure de la rondelle de protection, ledit logement annulaire comportant un fond, qui est sensiblement perpendiculaire à l'âme de ladite rondelle de protection et une surface latérale extérieure raccordée audit fond, le diamètre de ladite surface latérale croissant quand on se déplace depuis le fond jusqu'à celle des faces extérieures de la rondelle de protection où débouche le logement annulaire.

Dans un mode préféré de réalisation, l'alésage pratiqué dans le corps du raccord comporte, dans sa partie extrême qui est destinée à entourer un tube à raccorder, un évidement tronconique, dont le diamètre est progressivement croissant vers l'extérieur du corps du raccord; le diamètre maximum de l'évidement tronconique est inférieur au diamètre extérieur maximum du logement annulaire ménagé sur la rondelle de protection; l'alésage du corps du raccord comporte une partie intérieure cylindrique, qui se raccorde à l'évidement tronconique sans discontinuité dans les diamètres; la surface intérieure de l'écrou est conique et le jonc rond ouvert a, en vis-à-vis de la portée conique intérieure de l'écrou, une surface extérieure arrondie; le corps du raccord est constitué par un manchon cylindrique à chaque extrémité duquel est introduite l'extrémité d'un tube à raccorder.

Dans une variante de réalisation, la rondelle de protection forme une seule pièce avec le jonc rond ouvert; dans ce cas, la partie de la pièce, qui constitue le jonc rond ouvert, est pourvue de plusieurs fentes radiales s'étendant sensiblement sur toute la longueur de la partie considérée, ces fentes radiales étant régulièrement espacées les unes des autres.

Pour mieux faire comprendre l'objet de la présente invention, on va en décrire ci-après, à titre d'exemple purement illustratif et non limitatif, un mode de réalisation représenté sur le dessin annexé.

Sur ce dessin:

— la figure 1 représente partiellement en coupe axiale et partiellement en élévation, un raccord démontable selon l'invention;

— la figure 2 représente, en coupe axiale selon II-II de la figure 3, une pièce unique pouvant équiper le raccord de la figure 1, cette pièce unique faisant à la fois office de rondelle de protection et de jonc rond ouvert, et

— la figure 3 représente une vue selon III-III de la figure 2.

En se référant au dessin annexé, on voit que l'on a représenté un raccord démontable qui sert, dans cet exemple de réalisation, à réunir deux tubes métalliques 1 de même diamètre. Il est bien entendu que le raccord selon l'invention peut être modifié pour assurer, par exemple, la liaison entre un appareil et une tuyauterie ou le raccordement entre deux tubes en équerre, trois ou quatre tubes de même diamètre ou de diamètre différents, sans pour autant sortir du cadre de la présente invention.

Le corps du raccord consiste en un manchon 2 de forme générale cylindrique dans l'alésage 3 duquel sont introduites les extrémités des deux tubes 1 à assembler. Le manchon 2 constitue une pièce symétrique qui est divisée en deux moitiés identiques par son plan médian transversal. L'alésage 3 qui traverse de part en part le manchon 2 a un diamètre qui est légèrement supérieur au diamètre extérieur des deux tubes 1 à assembler. A chacune des zones d'extrémité de l'alésage 3 est ménagé un évidement tronconique 4 dont le diamètre va décroissant quand on se déplace vers l'intérieur du manchon 2. L'angle au sommet de l'évidement tronconique 4 est de 24°; le diamètre minimum de l'évidement tronconique 4 est égal au diamètre de la partie cylindrique intérieure de l'alésage 3.

Le manchon 2 comporte extérieurement à ses deux extrémités un filetage 2<u>a</u>, 2<u>b</u> qui coopère avec le filetage intérieur de deux écrous 5. Chaque écrou 5 présente intérieurement dans sa zone opposée au filetage qui coopère avec le filetage 2<u>a</u> ou 2<u>b</u> du manchon 2 une portée conique 6. Les deux écrous 5 prennent appui par leur portée conique 6 sur un jonc rond ouvert 7. Entre un jonc rond ouvert 7 et l'extrémité correspondante du manchon 2 sont insérés, d'une part, un joint torique d'étanchéité 8 et, d'autre part, une rondelle de protection 9.

Le jonc rond ouvert 7 présente en vis-à-vis de la portée conique 6 une surface courbe arrondie; le jonc rond ouvert 7 prend appui, au serrage, par une surface plane sur la rondelle de protection 9; avant serrage par l'écrou 5, le diamètre intérieur du jonc rond ouvert 7 est légèrement supérieur au diamètre extérieur du tube 1 à raccorder.

La rondelle de protection 9 est sensiblement de révolution autour de son axe; elle présente une cavité cylindrique à l'intérieur de laquelle s'engage un tube 1 à raccorder. Le diamètre extérieur de la rondelle de protection 9 est suffisant pour qu'elle puisse venir en butée contre l'extrémité du manchon 1, ce diamètre extérieur étant cependant inférieur au diamètre intérieur de l'écrou 5 mesuré dans sa zone filetée.

Une des caractéristiques importantes du raccord selon l'invention provient de ce que le logement du joint torique est, pour l'essentiel, ménagé non pas au débouché de l'alésage 3 du manchon 2, mais sur la face de la rondelle de protection 9 qui vient en appui contre le manchon 2. Ainsi qu'il est visible sur le dessin, sur la bordure de la cavité cylindrique de la rondelle 9, qui est tournée du côté du manchon 2, est ménagé un logement ayant la forme d'un anneau tronconique, destiné à contenir au moins partiellement le joint torique 8. Ce logement tronconique est délimité par un fond 9<u>a</u> sensiblement perpendiculaire à l'axe de la rondelle 9; à ce fond 9<u>a</u> est raccordée une surface latérale tronconique 9<u>b</u> dont le diamètre décroît progressivement quand on se déplace vers l'intérieur de la rondelle 9. L'angle au sommet de la surface latérale tronconique 9<u>b</u> est de 28°. Le diamètre maximum de la surface latérale tronconique 9<u>b</u> de la rondelle 9 est supérieur au diamètre maximum de l'évidement tronconique 4 du manchon 2.

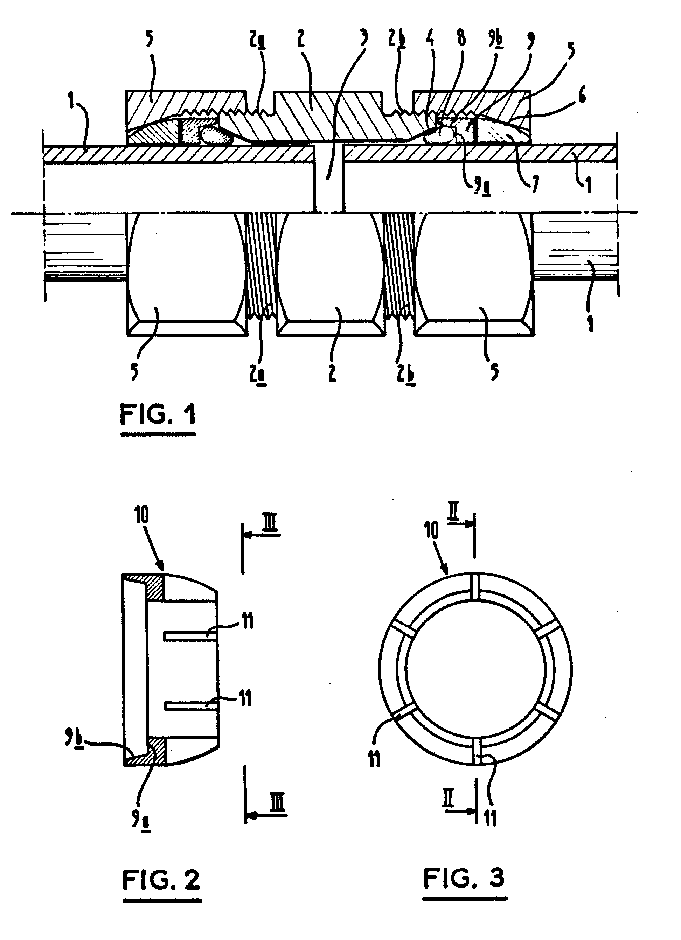

Dans l'exemple de réalisation de la figure 1, le jonc rond ouvert 7 et la rondelle de protection 9 constituent deux pièces séparées. Cependant, pour réduire le nombre d'éléments nécessaires à la réalisation du raccord selon l'invention et pour faciliter les opérations de montage et de démontage d'un tel raccord, la rondelle de protection 9 peut former une seule pièce avec le jonc rond ouvert 7, comme représenté sur les figures 2 et 3 du dessin. On a désigné par 10, dans son ensemble, une telle pièce. Dans la partie de la pièce 10, qui fait office de rondelle de protection, on retrouve bien le logement en forme d'anneau tronconique qui est destiné à recevoir le joint torique d'étanchéité 8. Le logement de joint de la pièce 10 comporte également un fond annulaire 9<u>a</u> perpendiculaire à son axe et, raccordée à ce fond, une surface latérale tronconique 9<u>b</u>. Dans la partie de la pièce 10, qui fait office de jonc rond ouvert, sont pratiquées six fentes radiales 11 qui sont régulièrement espacées les unes des autres. La présence des fentes radiales 11 permet, au serrage, de réduire le diamètre intérieur de la pièce 10 dans sa partie qui constitue le jonc rond ouvert et, par suite, de supprimer le jeu initial existant entre le tube à raccorder et le jonc rond ouvert.

Lorsque l'on désire raccorder les extrémités des deux tubes 1, on enfile, dans l'ordre, autour de chacun des tubes, l'écrou de serrage 5, le jonc rond ouvert 7, la rondelle de protection 9 et le joint torique 8, puis l'on introduit les deux extrémités des deux tubes à l'intérieur de l'alésage 3 du manchon 1. On procède ensuite au vissage des écrous 5 sur les filetages 2a et 2b du manchon; au cours de ce vissage, le joint torique 8 est poussé à l'intérieur du logement annulaire de la rondelle de protection 9, et comme la section de ce logement est légèrement inférieure à la section du joint torique 8, une partie de ce dernier peut pénétrer à l'intérieur de l'évidement tronconique 4 du manchon 2; au serrage, le joint torique 8 est soumis à une compression croissante jusqu'au moment où la rondelle de protection 9 vient en butée contre l'extrémité du manchon 2. Au cours du vissage, le jonc rond ouvert 7 est serré autour du tube 1 à raccorder, ce qui assure ainsi la solidarisation mécanique du tube 1 avec le manchon 2 du raccord.

Grâce à la surface tronconique 9b, le joint torique d'étanchéité 8 est, au serrage, poussé vers l'intérieur de l'évidement tronconique 4 et il n'a donc pas tendance à fluer vers l'extérieur entre les extrémités du manchon 2 et de la rondelle de protection 9, qui sont destinées à venir en appui l'une contre l'autre. Ainsi, le joint torique 8 ne risque pas d'être détérioré et une bonne étanchéité peut être assurée en toutes circonstances entre les extrémités des deux tubes 1.

Après la mise en place du raccord et vissage des deux écrous 5, la pression du fluide transporté à l'intérieur des deux tubes 1 a pour effet de pousser le joint torique 8 dans la zone de plus petit diamètre du logement tronconique prévu sur la rondelle de protection 9, contre le fond annulaire 9a dudit logement. De ce fait, plus la pression régnant à l'intérieur des deux tubes 1 assemblés est élevée, plus le joint torique 8 est comprimé autour du tube correspondant dans la zone de plus petit diamètre du logement tronconique et meilleure est, par conséquent, l'étanchéité qui en résulte entre le tube 1 correspondant et la rondelle de protection 9.

Le raccord selon l'invention peut être aisément démonté et rémonté avec possibilité de réutilisation de l'ensemble des éléments y compris du joint torique 8 qui ne se trouve pas endommagé. En outre, ce mode d'assemblage peut être réalisé même s'il n'est pas prévu, sur le corps de raccord utilisé, un évidement tronconique 4, ce qui peut être le cas lorsqu'il s'agit de raccorder une tuyauterie sur un appareil existant. On peut encore remarquer que ce raccordement est réalisé quel que soit le dimensionnement de l'évidement tronconique 4 puisque, à la mise sous pression des tuyauteries 1, le joint torique 8 n'a pas tendance à fluer vers l'intérieur de l'évidement tronconique 4 mais est, au contraire, poussé à l'intérieur du logement annulaire de la rondelle de protection 9.

**Revendications**

1. Raccord démontable pour tubes ou tuyauteries comportant, d'une part, un corps (2) où est ménagé au moins un alésage (3), une extrémité d'un tube à raccorder étant enfilée à l'intérieur dudit alésage, et d'autre part, pour chaque tube à raccorder, en premier lieu, un joint torique d'étanchéité (8), en second lieu, une rondelle de protection (9, 10) dont une face est destinée à venir en appui contre le corps (2) du raccord, en troisième lieu, un jonc rond ouvert (7) et, en quatrième lieu, un écrou de serrage (5) portant un filetage intérieur qui coopère avec un filetage extérieur porté par le corps du raccord, ledit écrou (5) s'appuyant par une partie de sa surface intérieure sur le jonc rond précité, caractérisé par le fait que la rondelle de protection (9, 10) présente un logement (9a, 9b) destiné à recevoir le joint torique d'étanchéité (8), ce logement ayant la forme d'un anneau ménagé le long de la bordure périphérique intérieure de la rondelle de protection (9, 10), ledit logement annulaire comportant un fond (9a), qui est sensiblement perpendiculaire à l'axe de ladite rondelle de protection et une surface latérale extérieure (9b) raccordée audit fond, le diamètre de ladite surface latérale (9b) croissant quand on se déplace depuis le fond (9a) jusqu'à celle des faces extérieures de la rondelle de protection où débouche le logement annulaire.

2. Raccord selon la revendication 1, caractérisé par le fait que l'alésage (3) pratiqué dans le corps (2) du raccord présente, dans sa partie extrême qui est destinée à entourer un tube à raccorder (1), un évidement tronconique (4) dont le diamètre est progressivement croissant vers l'extérieur du corps (2) du raccord.

3. Raccord selon la revendication 2, caractérisé par le fait que le diamètre maximum de l'évidement tronconique (4) est inférieur au diamètre extérieur maximum du logement annulaire (9a, 9b) ménagé sur la rondelle de protection (9, 10).

4. Raccord selon l'une des revendications 1 à 3, caractérisé par le fait que l'alésage (3) du corps (2) du raccord comporte une partie intérieure cylindrique, qui se raccorde à l'évidement tronconique (4) sans discontinuité dans les diamètres.

5. Raccord selon l'une des revendications 1 à 4, caractérisé par le fait que la rondelle de protection (10) forme une seule pièce avec le jonc rond ouvert.

6. Raccord selon la revendication 5, caractérisé par le fait que la partie de la pièce (10) qui constitue le jonc rond ouvert est pourvue de plusieurs fentes radiales (11) s'étendant sensiblement sur toute la longueur de la partie considérée, ces fentes radiales (11) étant régulièrement espacées les unes des autres.

7. Raccord selon l'une des revendications 1 à 6, caractérisé par le fait que la surface intérieure de l'écrou (5) est conique et que le jonc rond ouvert (7) a, en vis-à-vis de la portée conique (6) intérieure de l'écrou (5), une surface extérieure arrondie.

8. Raccord selon l'une des revendications 1 à 7, caractérisé par le fait que le corps (2) du raccord consiste en un manchon cylindrique à chaque extrémité duquel est introduite l'extrémité d'un tube à raccorder (1).

**Patentansprüche**

1. Abnehmbare Verbindung für Röhren oder Leitungen, die einerseits einen Körper (2) enthält, der mit wenigstens einer Bohrung (3) ausgestattet ist, wobei ein Ende eines zu verbindenden Rohres in das Innere besagter Bohrung eingeführt wird, und die andererseits für jedes zu verbindende Rohr erstens eine ringförmige Dichtung (8), zweitens eine Schutzscheibe (9, 10), deren eine Fläche dazu vorgesehen ist, an dem Verbindungskörper (2) anzuliegen, drittens einen offenen runden Ring (7) und viertens eine Klemmutter (5) mit einem Innengewinde enthält, das mit einem Aussengewinde am Verbindungskörper zusammenwirkt, wobei die besagte Mutter (5) mit einem Abschnitt ihrer Innenfläche an dem erwähnten runden Ring anliegt, dadurch gekennzeichnet, dass die Schutzscheibe (9, 10) einen Sitz (9a, 9b) aufweist, der dazu bestimmt ist, die ringförmige Dichtung (8) aufzunehmen, wobei dieser Sitz die Form eines Ringes hat, der entlang des inneren peripheren Randes der Schutzscheibe (9, 10) ausgeführt ist, wobei der besagte ringförmige Sitz einen Boden (9a), der im wesentlichen senkrecht zur Achse der besagten Schutzscheibe ist, und eine äussere Seitenfläche (9b) aufweist, die mit dem genannten Boden verbunden ist, und deren Durchmesser vom Boden (9a) zu der Aussenseite der Schutzscheibe, in die der ringförmige Sitz mündet, hin zunimmt.

2. Verbindung nach Anspruch 1, dadurch gekennzeichnet, dass die im Verbindungskörper (2) ausgeführte Bohrung (3) an ihrem Endabschnitt, der dazu bestimmt ist, ein zu verbindendes Rohr (1) zu umschliessen, eine kegelstumpfförmige Aussparung (4) aufweist, deren Durchmesser zur Aussenseite des Verbindungskörpers (2) hin fortschreitend zunimmt.

3. Verbindung nach Anspruch 2, dadurch gekennzeichnet, dass der maximale Durchmesser der kegelstumpfförmigen Aussparung (4) kleiner ist als der maximale äussere Durchmesser des ringförmigen Sitzes (9a, 9b), der an der Schutzscheibe (9, 10) ausgeführt ist.

4. Verbindung nach einem der Ansprüche 1 bis 3, dadurch gekennzeichnet, dass die Bohrung (3) des Verbindungskörpers (2) einen zylindrischen Innenabschnitt aufweist, der sich an die kegelstumpfförmige Aussparung (4) ohne Unstetigkeit im Durchmesser anschliesst.

5. Verbindung nach einem der Ansprüche 1 bis 4, dadurch gekennzeichnet, dass die Schutzscheibe (10) mit dem runden offenen Ring ein einziges Teil bildet.

6. Verbindung nach Anspruch 5, dadurch gekennzeichnet, dass der Abschnitt des Teils (10), der den runden offenen Ring bildet, mit mehreren radialen Schlitzen (11) versehen ist, die sich im wesentlichen über die ganze Länge des in Betracht gezogenen Abschnittes erstrecken, und zueinander einen gleichmässigen Abstand aufweisen.

7. Verbindung nach einem der Ansprüche 1 bis 6, dadurch gekennzeichnet, dass die Innenfläche der Mutter (5) konisch ist und dass der runde offene Ring (7) gegenüber der konischen Fläche (6) im Innern der Mutter (5) eine abgerundete Aussenfläche aufweist.

8. Verbindung nach einem der Ansprüche 1 bis 7, dadurch gekennzeichnet, dass der Verbindungskörper (2) aus einer zylindrischen Hülse besteht, in die an jedem Ende das Ende eines zu verbindenden Rohres (1) eingeführt ist.

**Claims**

1. A detachable connector for tube or pipe systems comprising on the one hand, a barrel (2) wherein there is arranged at least one bore (3), one end of a tube to be connecting being fitted within the said bore, and on the other hand, for each tube to be connected, firstly, a sealing O ring (8) and secondly, a protective washer (9, 10), one side of which is intended to come to bear against barrel (2) of the connector, thirdly, an open round locking ring (7) and fourthly, a tightening nut (5) carrying an inner thread which cooperates with an outer thread carried by the barrel of the connector, the said nut (5) bearing with a part of its inner surface on the above mentioned round locking ring, characterised in that the protective washer (9, 10) has a recess (9a, 9b) intended to accommodate the sealing O ring (8), this recess having the shape of a ring arranged along the inner peripheral edge of the protective washer (9, 10), this annular recess having a bottom (9a) which is substantially perpendicular to the axis of the said protective washer and an external side surface (9b) joined to the said bottom, the diameter of the said side surface (9b) increasing as one moves from the bottom (9a) as far as the one of the external sides of the protective washer wherein the annular recess emerges.

2. A connector according to claim 1, characterised in that the bore (3) cut in barrel (2) of the connector has, in its end portion which is intended to surround a tube to be connected (1), a frustoconical cut out (4) whose diameter progressively increases towards the outside of barrel (2) of the connector.

3. A connector according to claim 2, characterised in that the maximum diameter of the frustoconical cut out (4) is smaller than the maximum outer diameter of the annular recess (9a, 9b) arranged on the protective washer (9, 10).

4. A connector according to one of claims 1 to 3, characterised in that the bore (3) of barrel (2) of the connector comprises a cylindrical inner portion which is joined to the frustoconical cut out (4) without discontinuity in the diameters.

5. A connector according to one of claims 1 to 4, characterised in that the protective washer (10) forms a single component with the open round locking ring.

6. A connector according to claim 5, characterised in that the portion of component (10) which constitutes the open round locking ring, is provided with several radial slots (11) extending substantially over the whole length of the component in question, these radial slots (11) being regularly interspaced from each other.

7. A connector according to one of claims 1 to 6, characterised in that the inner surface of nut (5) is conical and that the open locking ring (7) has, opposite the inner conical bearing surface (6) of nut (5), a rounded external surface.

8. A connector according to one of claims 1 to 7, characterised in that the barrel (2) of the connector consists of a cylindrical sleeve at each end whereof, there is introduced the end of a tube to be connected (1).

**FIG. 1**

**FIG. 2**

**FIG. 3**